# EUROPEAN PATENT APPLICATION

(11) **EP 1 841 235 A1**
(43) Date of publication of application: **03.10.2007**
(21) Application number: 06006894.7
(22) Date of filing: 31.03.2006
(51) Int. Cl.: H04N 7/30

(54) **Video compression by adaptive 2D transformation in spatial and temporal direction**

(71) Applicant: MATSUSHITA ELECTRIC INDUSTRIAL CO., LTD, Kadoma-shi, Osaka 571-8501 (JP)
(72) Inventor: Schuur, Bernhard, Monzastrasse 4C 63225 Langen (DE); Wedi, Thomas, Dr., Monzastrasse 4C 63225 Langen (DE); Wittmann, Steffen, Monzastrasse 4C 63225 Langen (DE)
(74) Representative: Grünecker, Kinkeldey, Stockmair & Schwanhäusser Anwaltssozietät

(57) **Abstract**

The present invention relates to an improved method for compressing and decompressing of video data and a corresponding encoder and decoder. Video data is divided into one or more 3-dimensional blocks, comprising information from a plurality of consecutive video images. Each 3D block is sliced into a number of 2-dimensional blocks in either the spatial xy-domain or in the spatiotemporal xt- or yt- domain. These 2D blocks are then encoded by a conventional 2D encoder, such as an encoder based on a 2-dimensional orthogonal transformation. Upon decoding, the corresponding 2D decoder decodes the plurality of 2-dimensional blocks, from which 3-dimensional blocks of video data will be reconstructed. Combining the reconstructed 3-dimensional blocks ultimately leads to the reconstructed video data. According to an embodiment of the present invention, this method can be combined with intra and inter-frame prediction such as motion compensated prediction by applying the spatiotemporal coding to the prediction error signal rather than to the raw video signal.

## Description

The present invention relates to the compression of video data. Particularly, the present invention relates to a method for compressing and decompressing video data with improved coding efficiency and a corresponding encoder and decoder.

### BACKGROUND OF THE INVENTION

Video data is being adopted in increasing numbers of applications, ranging from video-telephoning and video-conferencing to DVD and digital television. When video data is being transmitted or recorded, a substantial amount of data has to be sent through conventional transmission channels of limited bandwidth or has to be stored on conventional storage media of limited capacity. In order to transmit and store digital data on conventional channels/media, it is inevitable to compress or reduce the volume of digital data.

For the compression of video data, a plurality of video encoding standards has been developed. Such video standards are, for instance, ITU-T standards denoted with H.26x and ISO/IEC standards denoted with MPEG-x. The most up-to-date and advanced video encoding standard is currently the standard denoted as H.264/MPEG-4 AVC.

The encoding approach underlying most of these standards consists of the following main stages:
(a) Dividing each individual video frame into 2-dimensional blocks of pixels in order to subject each video frame to data compression at a block level.
(b) Decorrelating spatiotemporal video information by applying a temporal prediction scheme to each block and by transforming the residual prediction error from the spatial domain into the frequency domain.
(c) Reducing the overall amount of data by quantizing the resulting transform coefficients.
(d) Compressing the remaining data by entropy encoding the quantized transform coefficients.

It is a particular approach of current video coding standards that the image information is transformed from the spatial domain into the frequency domain. Image compression is achieved by representing the image content by only a few frequency components. A natural image content is mostly concentrated in the coefficients of the lower frequency domain. Higher frequency parts, for which the human eye is less sensitive anyway, can thus be removed or quantized in order to lower the amount of data to be coded.

In many applications, the volume or bandwidth available for storing or transmitting video data is seriously restricted. There is thus the urgent need to compress the video data as far as possible. However, increasing data compression rate by reducing the amount of data by quantizing even more coarsely, inevitably leads to a deterioration of image quality.

### SUMMARY OF THE INVENTION

The aim of the present invention is to provide a method for compressing and decompressing video data with improved data compression rate and image quality.

This is achieved by the features as set forth in the independent claims.

Preferred embodiments are the subject matter of dependent claims.

It is the particular approach of the present invention to partition the video data into 3-dimensional blocks comprising a plurality of consecutive images and to apply a conventional 2-dimensional transformation to slices cut from this 3D block orthogonally to either the horizontal, vertical, or temporal direction. The encoder may thus choose the appropriate domain for applying the transformation in order to optimize coding efficiency. The resulting transform coefficients may then be quantized and entropy-coded. Upon decoding, transform coefficients are subjected to the corresponding inverse transformation and the resulting 2-dimensional slices of video data are properly re-assembled so as to form the reconstructed video data.

According to a first aspect of the present invention, a method for encoding a sequence of video images is provided. The method comprises the steps of selecting either one of the horizontal-vertical, horizontal-temporal, and vertical-temporal domain in a 3-dimensional block of image data, the 3-dimensional block consisting of Nₓ pixels in a horizontal direction, N_{y} pixels in a vertical direction, and Nₜ pixels in a temporal direction out of Nₜ consecutive video images, wherein Nₓ, N_{y}, and Nₜ are positive integers larger than 1; dividing the 3-dimensional block in accordance with the selected domain into a plurality of 2-dimensional blocks; transforming the plurality of 2-dimensional blocks of image data into transform coefficients by means of a two-dimensional transformation; and encoding the transform coefficients.

According to a further aspect of the present invention, a method for decoding a sequence of video images is provided. The method comprises the steps of decoding transform coefficients; inverse transforming the transform coefficients into a plurality of 2-dimensional blocks of image data by means of a 2-dimensional inverse transformation; deciding between either the horizontal-vertical, horizontal-temporal, and vertical-temporal domain; and reconstructing a 3-dimensional block of image data by stacking the plurality of 2-dimensional blocks of image data parallel to the decided domain, wherein the 3-dimensional block consists of **Nₓ** pixels in a horizontal direction, **N_{y}** pixels in a vertical direction, and **Nₜ** pixels in a temporal direction corresponding to **Nₜ** consecutive video images, and wherein **Nₓ, N_{y},** and **Nₜ** are positive integers larger than 1.

According to a further aspect of the present invention, an encoder for encoding a sequence of video images is provided. The encoder comprises a selecting means for selecting either one of the horizontal-vertical, horizontal-temporal, and vertical-temporal domain in a 3-dimensional block of image data, the 3-dimensional block consisting of **Nₓ** pixels in a horizontal direction, **N_{y}** pixels in a vertical direction, and **Nₜ** pixels in a temporal direction out of **Nₜ** consecutive video images, wherein **Nₓ, N_{y},** and **Nₜ** are positive integers larger than 1, a dividing means for dividing the 3-dimensional block in accordance with the selected domain into the plurality of 2-dimensional blocks, a transformation means for transforming a plurality of 2-dimensional blocks of image data into transform coefficients by means of a two-dimensional transformation, and an encoding means for encoding the transform coefficients.

According to a further aspect of the present invention, a decoder for decoding a sequence of video images is provided. The decoder comprises a decoding means for decoding transform coefficients, an inverse transforming means for inverse transforming the transform coefficients into a plurality of 2-dimensional blocks of image data by means of a 2-dimensional inverse transformation, a deciding means for deciding between either the horizontal-vertical, horizontal-temporal, and vertical-temporal domain, and a reconstructing means for reconstructing a 3-dimensional block of image data by stacking the plurality of 2-dimensional blocks of image data parallel to the decided domain, wherein the 3-dimensional block consists of **Nₓ** pixels in a horizontal direction, **N_{y}** pixels in a vertical direction, and **Nₜ** pixels in a temporal direction corresponding to **Nₜ** consecutive video images, and wherein **Nₓ, N_{y},** and **Nₜ** are positive integers larger than 1.

Preferably, a domain identifier identifying the selected domain is encoded and decoded together with the transform coefficients. Upon decoding, the domain is preferably decided in accordance with the decoded domain identifier. In this manner, the decoder can easily identify the orientation of the 2-dimensional slices of transform coefficients and reconstruct the 3-dimensional block of image data.

Preferably, the domain is selected in accordance with an image content of the 3-dimensional block of image data. Therefore, the sequence of video images can be encoded adaptively in order to optimize coding efficiency, image quality, or computing time.

Preferably, the coding efficiencies that can be achieved by selecting either one of the horizontal-vertical (xy), horizontal-temporal (xt), and vertical-temporal (yt) domain are estimated beforehand, the domain is selected in accordance with the result of the estimation. In this manner, the optimum domain can be selected in order to further improve coding efficiency.

Preferably, the 3-dimensional block of image data is predicted from previously encoded image data, and the result of prediction is subtracted from the 3-dimensional block of image data to encode a prediction error signal. Upon decoding, the 3-dimensional block of image data is predicted from previously decoded image data, and the result of prediction is added to the 3-dimensional block of image data. In this manner, coding efficiency can be further improved by encoding only unpredictable differences between images, i.e., the prediction error.

Preferably, the step of predicting is based on interpolation and/or extrapolation of previously encoded image data. Moreover, the 3-dimensional block of image data preferably comprises I-frames only. In this case, the video data can be coded based on a intra-prediction method.

Preferably, the step of predicting is based on motion compensation. Moreover, the 3-dimensional block of image data comprises B-frames only or B and P-frames. In this case, the video data can be coded based on a inter-prediction method.

Preferably, the two-dimensional transformation is a discrete (inverse) cosine transformation. Therefore, the image data can efficiently be transformed into the frequency domain and vice versa.

Preferably, the sequence of video images is partitioned into a plurality of 3-dimensional blocks of image data. In this manner, a large volume of video data can be encoded/decoded on the basis of 3-dimensional blocks of image data.

Preferably, the sequence of video images is partitioned into a plurality of 3-dimensional blocks in accordance with frames of the sequence of video images being either an I, P, or B-frame. In this manner, either intra- or inter-predictive coding can be applied to each of the 3-dimensional blocks of image data.

Preferably, the 3-dimensional block of image data consists of an equal number of pixels in the horizontal, the vertical, and the temporal direction. In this case, the very same two-dimensional (inverse) transformation can be applied independently of the selected domain.

The above and other objects and features of the present invention will become more apparent from the following description and preferred embodiments given in conjunction with the accompanying drawings, in which:
- Fig.1: schematically illustrates in block diagram form the configuration of a conventional hybrid video encoder,
- Fig. 2: schematically illustrates in block diagram form the configuration of a conventional hybrid video decoder,
- Fig. 3: is a schematic drawing of a 3D block of video data,
- Fig. 4a: provides an example for spatiotemporal coding in accordance with a first embodiment of the present invention,
- Fig. 4b: provides another example for spatiotemporal coding in accordance with the first embodiment of the present invention,
- Fig. 5: is a block digram for spatiotemporal encoding and decoding in accordance with a second embodiment of the present invention,
- Fig. 6a: is a schematic diagram of motion compensated prediction for a sequence of B-frames,
- Fig. 6b: is a schematic diagram of motion compensated prediction for a sequence of P-frames,
- Fig. 7: schematically illustrates in block diagram form the configuration of a hybrid video encoder in accordance to a third embodiment of the present invention,
- Fig. 8: schematically illustrates in block diagram form the configuration of a hybrid video decoder in accordance to the third embodiment of the present invention.

### DETAILED DESCRIPTION

In natural images, neighboring pixels are highly correlated. These correlations are due to a smooth variation of pixel data. Even edges cause (higher order) correlations in the image since they do not abruptly change direction on a length scale defined by the pixel size. These correlations generally reduce the entropy of the image data, a fact that is exploited by conventional image data compression techniques.

An important step in any conventional image data compression method is to find a representation of the image in terms of components that exhibit a lower degree of correlation than pixels in the spatial domain. This is usually achieved by applying an orthogonal transformation, such as a discrete cosine transformation (DCT), so as to transform the original image data into the frequency domain. Different spatial frequency components are mostly independent of each other so that the original image can be faithfully represented by selecting only the most "important" frequency components, e.g., the components with the largest amplitude, thus reducing the overall amount of image data.

In video data, time as a third dimension comes into play. Obviously, "natural" videos are characterized by a high degree of correlation between consecutive images. Conventionally, these temporal correlations are further exploited for video data compression by encoding only differences between consecutive images. In this context, motion compensated prediction is employed to encode a translation from one image to the next and to encode only the error of the predicted image.

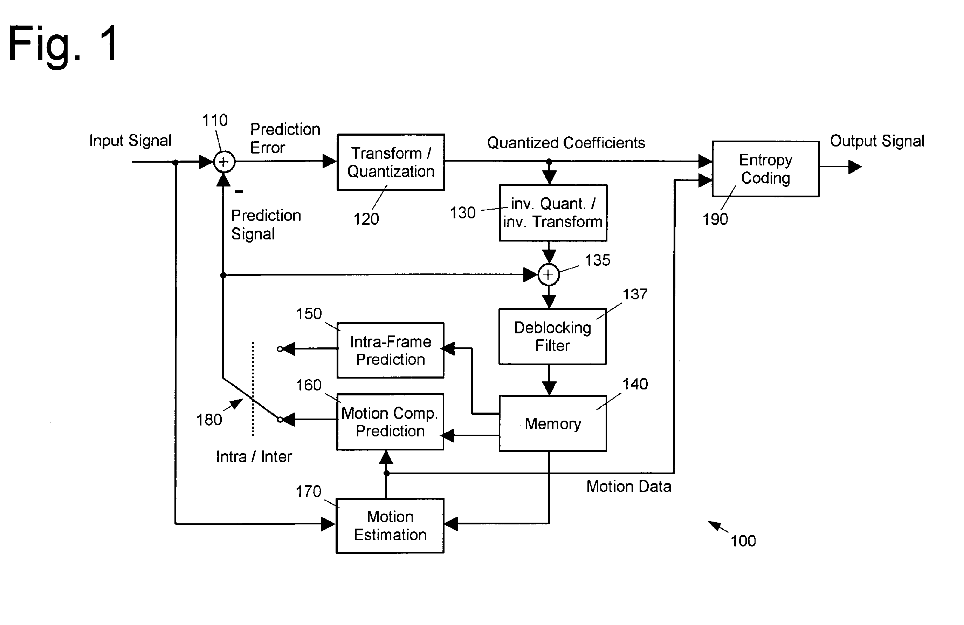

Referring to Fig. 1, an example of such a video encoder is illustrated. The video encoder, generally denoted by reference numeral 100, comprises a subtractor 110 for determining differences between a current block of a video image (input signal) and a prediction signal of the current block which is based on previously encoded blocks stored in memory 140. A transformation and quantization unit 120 transforms the resulting prediction error from the spatial domain to the frequency domain and quantizes the obtained transform coefficients. An entropy coding unit 190 entropy encodes the quantized transform coefficients.

In accordance with the H.264 / AVC standard, the input image is divided into macro blocks. The encoder 100 employs a Differential Pulse Code Modulation (DPCM) approach which only transmits differences between blocks of an input video sequence and their predictions based on previously encoded blocks ("the locally decoded image"). These differences are determined in subtractor 110, which receives the blocks to be encoded in order to subtract the prediction signal therefrom.

The locally decoded image is provided by a decoding unit incorporated into video encoder 100. The decoding unit performs the encoding steps in reverse manner. An inverse quantization and inverse transformation unit 130 dequantizes the quantized coefficients and applies an inverse transformation to the dequantized coefficients. In adder 135, the decoded differences are added to the prediction signal to form the locally decoded image. Further, a deblocking filter 137 reduces blocking artifacts in the decoded image.

The type of prediction that is employed by video encoder 100 depends on whether the macro blocks are encoded in "Intra" or "Inter" mode. In "Intra" mode the video encoding standard H.264/AVC uses a prediction scheme based on already encoded macro blocks of the same image in order to predict subsequent macro blocks. In "Inter" mode, motion compensated prediction between corresponding blocks of several consecutive frames is employed.

Only Intra-encoded images (I-type images) can be decoded without reference to any previously decoded image. The I-type images provide error resilience for the encoded video sequence. Further, entry points into bit streams of encoded data are provided by the I-type images in order to enable a random access, i.e. to access I-type images within the sequence of encoded video images. A switch between Intra-mode, i.e. a processing by Intra-frame prediction unit 150, and Inter-mode, i.e. a processing by motion compensated prediction unit 160, is controlled by Intra/Inter switch 180.

In "Inter" mode, a macro block is predicted from corresponding blocks of previous frames by employing motion compensation. The estimation is accomplished by a motion estimator unit 170, receiving the current input signal and the locally decoded image. Motion estimation yields two-dimensional motion vectors, representing a pixel displacement between the current block and the corresponding block in previous frames. Based on the estimated motion, a motion compensated prediction unit 160 provides a prediction signal.

For both the "Intra" and the "Inter" encoding mode, the differences between the current and the predicted signal are transformed into transform coefficients by transformation / quantization unit 120. Generally, an orthogonal transformation such as a two-dimensional Discrete Cosine transformation (DCT) or an integer version thereof is employed.

The transform coefficients are quantized in order to reduce the amount of data that has to be encoded. The step of quantization is controlled by quantization tables that specify the precision and therewith the number of bits that are used to encode each frequency coefficient. Lower frequency components are usually more important for image quality than fine details so that more bits are spend for coding the low frequency components than for the higher ones.

After quantization, the two-dimensional array of transform coefficients has to be converted into a one-dimensional string to pass it to the entropy encoder. This conversion is done by scanning the array in a predetermined sequence. The thus obtained one-dimensional sequence of quantized transform coefficients is compressed to a series of number pairs called run levels. Finally, the run-level sequence is coded with binary code words of variable length (Variable Length Code, VLC). The code is optimized to assign shorter code words to most frequent run-level pairs occurring in typical video images. The resulting bitstream is multiplexed with the motion information and stored on a recording medium or transmitted to the decoder side.

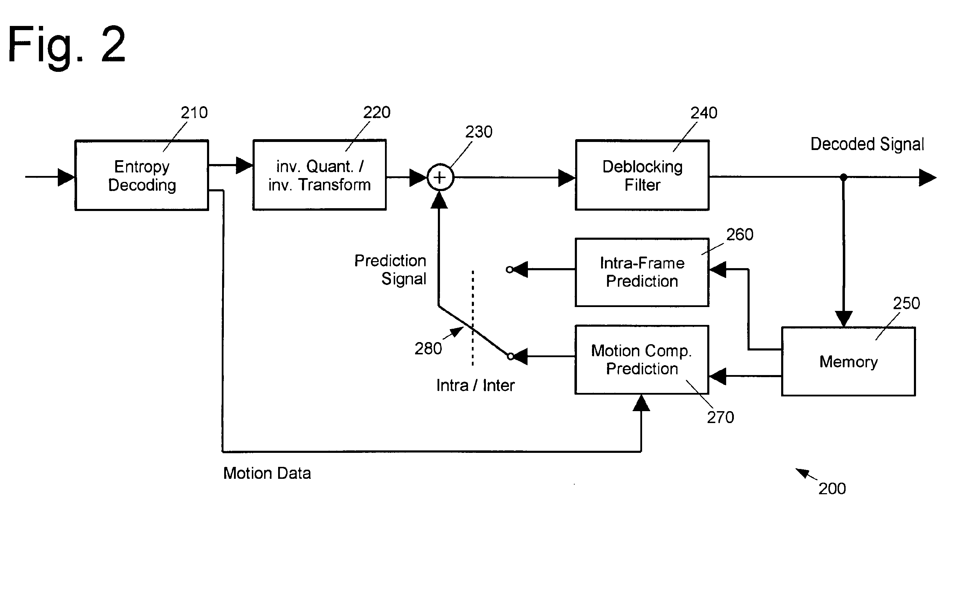

For reconstructing the encoded images at the decoder side, the encoding process is applied in reverse manner. A schematic block diagram, illustrating the configuration of the corresponding decoder, is shown in Fig. 2.

In decoder 200 of Fig. 2, first the entropy encoding of transform coefficients and motion data is reversed in an entropy decoding unit 210. This step also involves an inverse scanning in order to convert the sequence of decoded transform coefficients into a two-dimensional block of data as it is required for the inverse transformation. The decoded block of transform coefficients is then submitted to an inverse quantizer and inverse transformer 220 and the decoded motion data is sent to a motion compensated prediction unit 270. The result of the inverse transformation contains prediction differences and is added by adder 230 to the prediction signal stemming from the motion compensated prediction unit 270 in Inter-mode or stemming from an Intra-frame prediction unit 260 in Intra-mode. The reconstructed image may be passed through a deblocking filter 240 and the decoded signal is stored in memory 250 to be applied to prediction units 260, 270.

With the conventional video encoder/decoder shown in Figs. 1 and 2 the problem arises that no efficient data compression can be achieved if temporal correlations between consecutive images cannot be resolved by motion compensation, or if temporal correlations are more pronounced than spatial correlations.

It is the particular approach of the present invention to apply 2D transformations not only to blocks of neighboring pixels, i.e., in the spatial xy domain, but also in the spatiotemporal xt or yt domain. The encoder can thus choose an appropriate domain for the transformation in order to optimize coding efficiency.

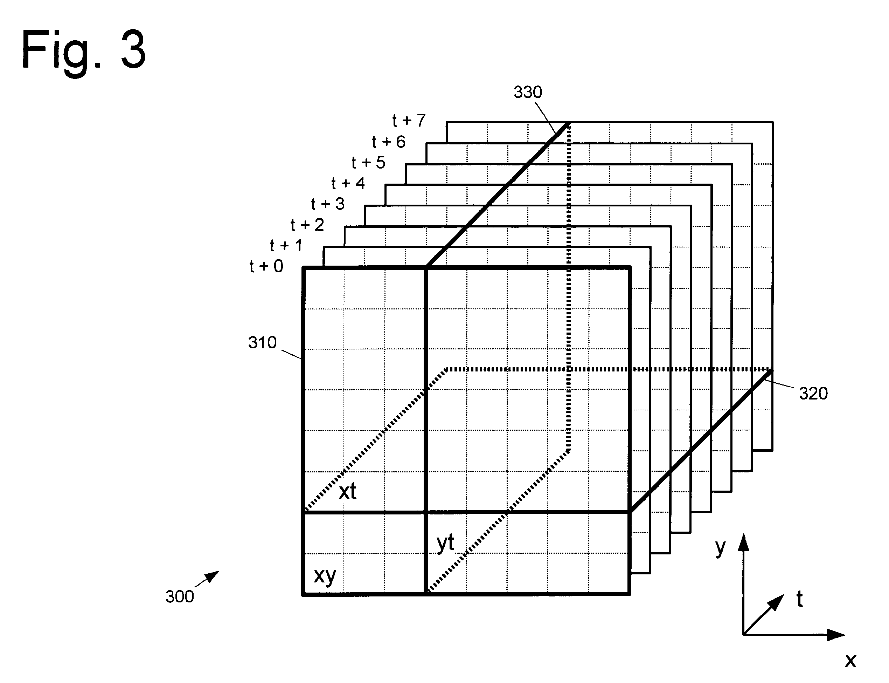

Referring to Fig. 3, the principle of applying the 2D transformation to spatiotemporal domains will be explained next. This figure illustrates a group of blocks taken from eight consecutive frames at time t, t+1, ... , t+7. Each block consists of eight pixels in the horizontal (x) and the vertical (y) direction. Taken all together, the blocks form a 3-dimensional block (300) of image data consisting of 8x8x8 pixels. Hereinafter, such a 3-dimensional block will be referred to as a 3D block.

Conventionally, the 2D orthogonal transformation is applied to the xy blocks (310) of each frame. According to the present invention, however, the 3D block may also be sliced in another direction, i.e., parallel to the xt (320) or yt (330) plane. This results also in eight 2D blocks with 8x8 pixels each, to which the very same 2D transformation can be applied. The encoder may hence choose the domain to which the transformation is to be applied. This decision may be taken depending on the actual image content in order to optimize coding efficiency.

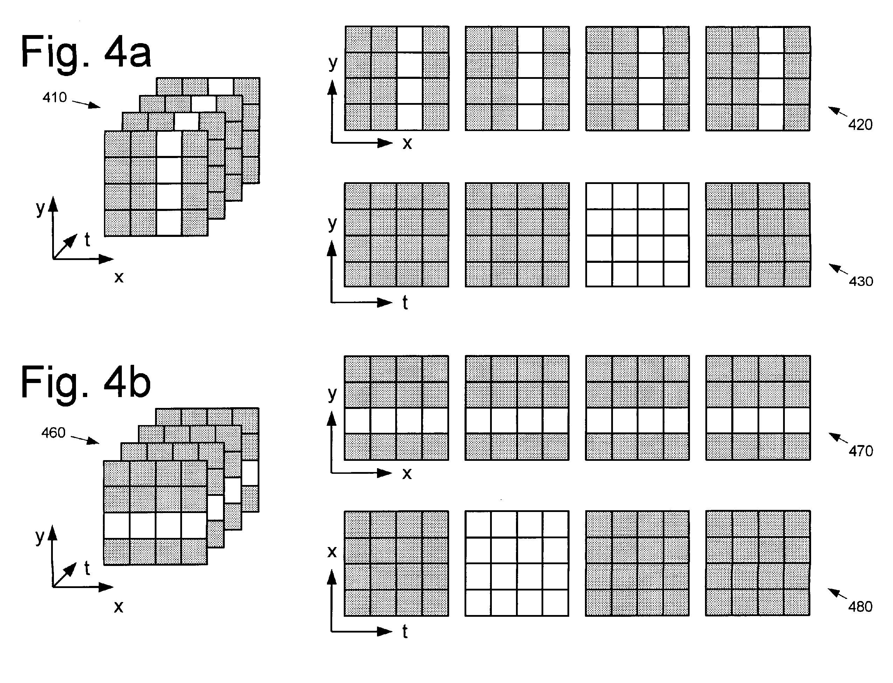

Figures 4a and 4b show two examples illustrating the effect of the present invention.

The left-hand side of Fig. 4a shows a 4x4x4 3D block 410 containing a stationary vertical edge (different gray values inside blocks denote different signal values). If this 3D block is decomposed in the xy-domain, which corresponds to the conventional method, the four blocks 420 shown in the upper right of Fig. 4a will be produced. Each of these blocks contains the vertical edge. Generally, edges lead to a wide range of transform coefficients (high spatial image frequencies) that can hardly be compressed.

On the other hand, if the 3D block 410 will be decomposed in the yt-domain, the four blocks 430 shown in the lower right of Fig. 4a will be produced. Obviously, a transformation of these blocks will generate only DC-coefficients in the transformed blocks. Therefore, a significant improvement in coding efficiency can be achieved in this case by applying the 2D transformation in the yt-domain rather than in the xy-domain.

Another example is illustrated in Fig. 4b. In this example, the 3D block 460 contains a stationary horizontal edge. If this 3D block is decomposed in the xy-domain, which corresponds to the conventional method, the four blocks 470 shown in the upper right of Fig. 4b will be produced. Each of these blocks contains the horizontal edge. On the other hand, if the 3D block 460 will be decomposed in the xt-domain, the four blocks 480 shown in the lower right of Fig. 4b will be produced. Similar as in the previous example, a transformation of these blocks will generate only DC-coefficients in the transformed blocks, resulting in a significant improvement in coding efficiency.

As can be seen in the above examples, decomposing a 3D block in a spatiotemporal domain rather than in the spatial domain can be particularly advantageous in case of a complex stationary image with little spatial correlations as in Fig. 4.

Although the above examples are related to 3D blocks consisting of either four or eight pixels in x-, y-, and t-direction, the present invention is not restricted in this respect. Rather, the invention may be applied to 3D blocks of any size or format, i.e., even to 3D blocks with a different number of pixels in either direction.

Although the present invention is preferably applied to 3D blocks consisting of at least two pixels in x-, y-, and t-direction, the invention can also be applied to degenerated 3D blocks consisting of only one pixel in either of the directions, such as a 8x1 x8 block. In this case, the 3D block can either be decomposed in one 2D block, namely one 8x8 xt-block, or into a plurality of 1D blocks, namely eight 1x1x8 t-blocks or eight 8x1x1 x-blocks, each of which being transformed by a degenerate 2D-transformation yielding only DC-coefficients in the degenerate direction. Finally, a step for deciding the domain for decomposing the degenerated 3D blocks may be omitted if the 2D transformation is always applied directly to the degenerated 3D block, i.e., without further decomposing the xt-block in the above example. In this manner, the conventional method of 2D-based encoding can also be applied to the spatiotemporal domain.

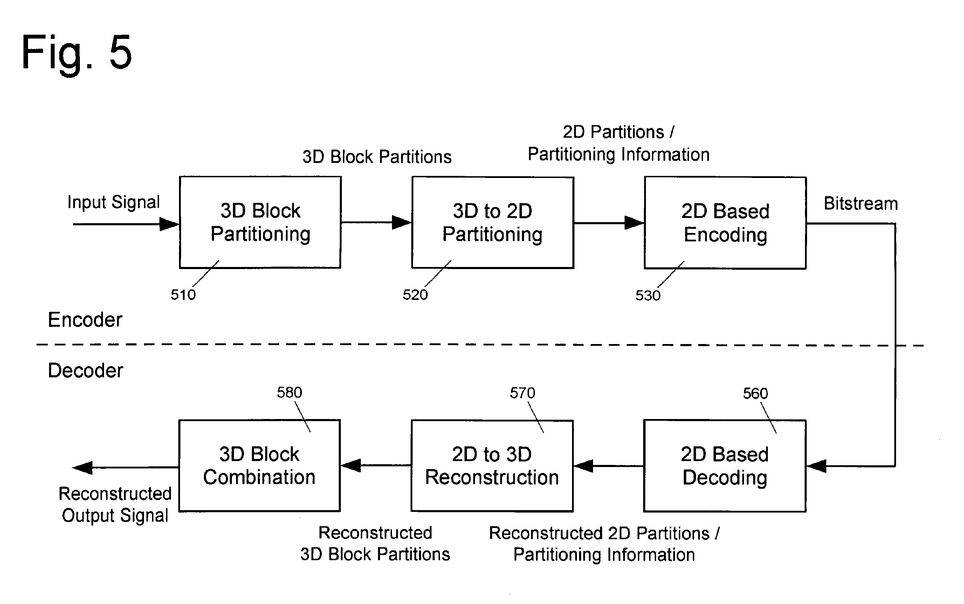

Referring now to Fig. 5, the general framework for encoding and decoding spatiotemporal data, such as video data, is explained next in accordance with another embodiment of the present invention. In the configuration shown in Fig. 5, an encoder comprises a 3D blocking unit 510, a 2D partitioning unit 520, and a 2D encoding unit 530. The bitstream generated by the 2D encoding unit is fed to a decoder comprising a 2D decoding unit 560, a 3D reconstruction unit 570, and a 3D block combination unit 580.

In the 3D blocking unit 510, the input video signal is partitioned into a plurality of 3D blocks. The input data may either be partitioned regularly into 3D blocks of uniform size or into a complex mosaic of 3D blocks with different sizes or formats.

In a second step, each 3D block is divided by the 2D partitioning unit 520 into a plurality of 2D slices of one pixel height, thus forming a plurality of 2-dimensional blocks of pixel data. Whether the 3D block is cut along the xy, xt, or yt plane is decided by the 2D partitioning unit in accordance with the image content of the 3D block. In particular, this decision may be made in accordance with the coding efficiency that can thus be realized; cf. Fig. 4. The information on this decision (partitioning information) may be encoded explicitly or implicitly into the output bitstream.

In a third step, each 2D block of xy, xt, or yt data is subjected to conventional 2D based encoding in the 2D encoding unit 530 to generate a bitstream representing the input video signal. The 2D encoding unit may be a transformation based image compression unit using an orthogonal transformation for converting the data into the frequency domain, a quantizer for reducing the transformed data, and an entropy coder for compressing the data. A popular example for such a 2D encoding unit is provided by the well-known JPEG standard.

Alternatively, the 2D encoding unit 530 may also apply a prediction based compression technique, such as intra-prediction between consecutively encoded 2D or 3D blocks of data in analogy to the hybrid video encoder described above in conjunction with Fig. 1.

The thus generated bitstream may be save to a storage means or transmitted via a communications channel.

Upon decoding this bitstream, each 2D block of data is decoded by the 2D decoding unit 560, which applies the appropriate inverse transformations in accordance to the 2D encoding unit 530. Examples are a conventional JPEG-decoder or a (intra-)prediction based decoder in analogy to the decoder described above in conjunction to Fig. 2.

From the thus decoded 2D blocks of data, corresponding 3D blocks are reconstructed by the 3D reconstruction unit 570. The information on how the 2D blocks have to be assembled, i.e., the partitioning information that defines whether the original 3D block has been cut along the xy, xt, or yt plane, may also be read from the bitstream.

Finally, the assembled 3D blocks are combined by the 3D block combination unit 580 in order to generate the reconstructed output signal.

In the above explanation it has been assumed that the input signal is raw video data. However, the present invention is not restricted to an application to raw video data but may also be used to encode the prediction error in a prediction based video encoding/decoding scheme. This will be explained below in greater detail.

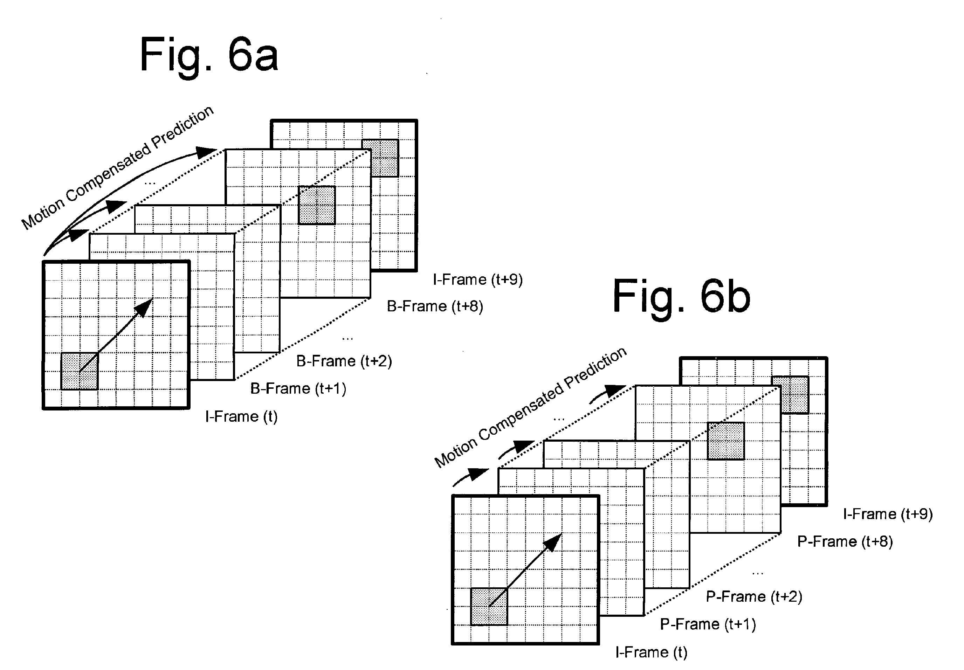

Figure 6a illustrates a sequence B-frames (bi-directionally predicted frames that are not used as a reference for any further predictions) in between two I-frames (intra-coded frames that can be decoded without reference to any other frame). In this case, each B-frame is motion-predicted from the first (t=0) and/or the second I-frame (t=9). The residual prediction error of each B-frame may be encoded and decoded in accordance with the embodiment of the present invention illustrated in conjunction with Fig. 5.

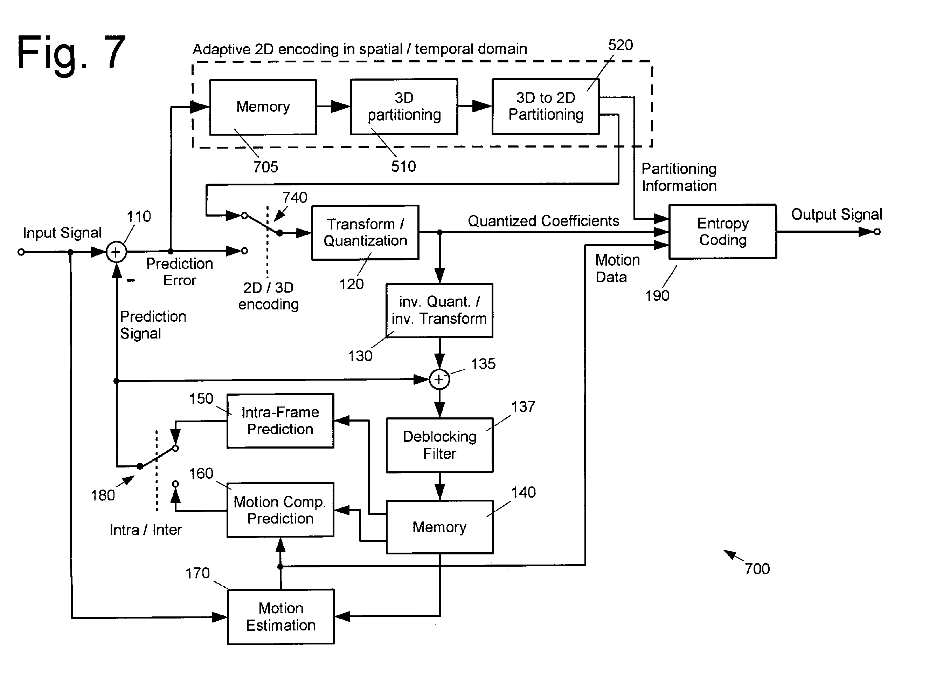

Figure 7 shows a block diagram of a video encoder in accordance with an embodiment of the present invention. Figure 7 is based on the block diagram of Fig. 1, wherein like parts are referred to by like reference numerals. The detailed description of parts that have already been described in conjunction with Fig. 1 will be omitted.

In order to encode the B-frames shown in Fig. 6a, the encoder thus holds the I-frames in its memory 140, generates a motion compensated prediction signal (160) based on a motion estimate (170) for each B-frame, and subtracts the prediction signal from the B-frame (110) to form the prediction error signal. The prediction error signals of each B-frame are accumulated in a memory unit 705 to form a spatiotemporal signal that may then be encoded and decoded in accordance with the embodiment of the present invention illustrated in conjunction with Fig. 5. In particular, 3D blocks of prediction error data are formed by a 3D blocking unit 510, each block consisting of eight-by-eight pixels in the xy domain and eight pixels in the t-direction. However, 3D blocks of a different size or format are also possible, e.g. with a number of pixels in the t-direction that corresponds to the number of consecutive B-frames. Each 3D block is then sliced either in the xy, xt, or yt domain by the 2D partitioning unit 520. In case of the adaptive coding in spatiotemporal domain, the resulting 2D blocks are then fed by means of signal switch 740 to the conventional 2D transformation and quantization unit 120. The resulting quantized transform coefficients are then entropy coded (190) into a bitstream in order to form the output signal.

In order to be able to decode this bitstream, the decoder needs to know in which domain each 3D block has been sliced. Therefore, partitioning information provided by the 2D partitioning unit 520 is also entropy encoded together with the motion data. The output bitstream is thus formed by the encoded quantized transform coefficients, the encoded partitioning information, and the encoded motion data.

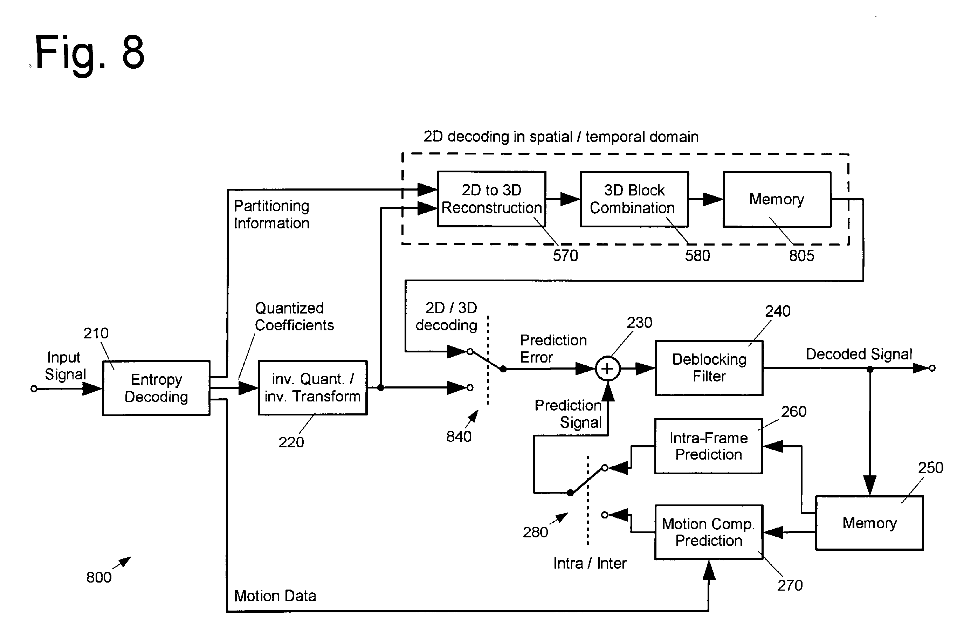

Figure 8 shows a block diagram of a video decoder in accordance with an embodiment of the present invention. Figure 8 is based on the block diagram of Fig. 2, wherein like parts are referred to by like reference numerals. The detailed description of parts that have already been described in conjunction with Fig. 2 will be omitted.

In order to decode the prediction error of, for instance, the B-frames illustrated in Fig. 6a, the procedure of Fig. 5 is applied. In particular, the input signal is fed into a entropy decoder 210 followed by inverse quantization and transformation unit 220 so as to obtain a plurality of 2D blocks, from which 3D blocks are reconstructed by means of the 3D reconstruction unit 570. Partitioning information, defining the domain in which each 3D block was sliced, is also obtained from the bitstream by means of the entropy decoder 210. The thus reconstructed 3D blocks of prediction errors are combined by the 3D block combination unit 580 to form the corresponding set of frames and stored in a memory unit 805. From there, the prediction error for each B-frame can be recalled and added to the corresponding prediction signal by means of the signal selector 840 and the adder 230.

In the above examples, spatiotemporal coding has been applied to B-frames only. The present invention may of course also be applied to P-frames. P-frames differ from B-frames in that they are used as a reference for predicting. Fig. 6b illustrates a series of P-frames in between two I-frames. Each P-frame is predicted by means of motion compensation from the preceding frame. In a decoder, obviously only the reconstructed version of each frame is available as a reference for prediction. In order to avoid accumulation of errors, a conventional encoder thus determines the prediction error for each frame on the basis of an internally reconstructed copy of the preceding frame (cf. Fig. 1). In case of the present invention, however, internally reconstructed copies are only available for frames from the previously encoded 3D block of data rather than from the 3D block that is currently being encoded. Therefore, the encoder has to determine the prediction error on the basis of the original frames rather than the reconstructed frames. Consequently, drift cannot be completely excluded if spatiotemporal coding is applied to P-frames.

Summarizing, the present invention relates to an improved method for compressing and decompressing of video data and a corresponding encoder and decoder. Video data is divided into one or more 3-dimensional blocks, comprising information from a plurality of consecutive video images. Each 3D block is sliced into a number of 2-dimensional blocks in either the spatial xy-domain or in the spatiotemporal xt- or yt-domain. These 2D blocks are then encoded by a conventional 2D encoder, such as an encoder based on a 2-dimensional orthogonal transformation. Upon decoding, the corresponding 2D decoder decodes the plurality of 2-dimensional blocks, from which 3-dimensional blocks of video data will be reconstructed. Combining the reconstructed 3-dimensional blocks ultimately leads to the reconstructed video data. According to an embodiment of the present invention, this method can be combined with intra and inter-frame prediction such as motion compensated prediction by applying the spatiotemporal coding to the prediction error signal rather than to the raw video signal.

## Claims

1. A method for encoding a sequence of video images, comprising the steps of:
transforming a plurality of 2-dimensional blocks (420; 430; 470; 480) of image data into transform coefficients by means of a two-dimensional transformation; and
encoding the transform coefficients;
**characterized by**
selecting either one of the horizontal-vertical (xy), horizontal-temporal (xt), and vertical-temporal (yt) domain in a 3-dimensional block (300; 410; 460) of image data, the 3-dimensional block (300; 410; 460) consisting of Nₓ pixels in a horizontal direction, N_{y} pixels in a vertical direction, and Nₜ pixels in a temporal direction out of Nₜ consecutive video images, wherein Nₓ, N_{y}, and Nₜ are positive integers larger than 1; and
dividing the 3-dimensional block (300; 410; 460) in accordance with the selected domain into the plurality of 2-dimensional blocks (420; 430; 470; 480).

2. An encoding method according to claim 1, further comprising the step of encoding a domain identifier identifying the selected domain.

3. An encoding method according to claim 1 or 2, wherein the step of selecting the domain is performed in accordance with an image content of the 3-dimensional block (300; 410; 460) of image data.

4. An encoding method according to any of claims 1 to 3, further comprising the step of estimating coding efficiencies achievable by selecting either one of the horizontal-vertical (xy), horizontal-temporal (xt), and vertical-temporal (yt) domain; and wherein the step of selecting is performed in accordance with a result of the step of estimating.

5. An encoding method according to any of claims 1 to 4, further comprising the steps of:
predicting the 3-dimensional block (300; 410; 460) of image data from previously encoded image data; and
subtracting a result of the step of predicting from the 3-dimensional block (300; 410; 460) of image data to encode a prediction error signal.

6. An encoding method according to claim 5, wherein the step of predicting is based on interpolation and/or extrapolation of previously encoded image data.

7. An encoding method according to claim 6, wherein the 3-dimensional block (300; 410; 460) of image data comprises I-frames only.

8. An encoding method according to claim 5, wherein the step of predicting is based on motion compensation.

9. An encoding method according to claim 8, wherein the 3-dimensional block (300; 410; 460) of image data comprises B-frames only.

10. An encoding method according to claim 8, wherein the 3-dimensional block (300; 410; 460) of image data comprises B and P-frames.

11. An encoding method according to any of claims 1 to 10, wherein the two-dimensional transformation is a discrete cosine transformation.

12. An encoding method according to any of claims 1 to 11, further comprising the step of partitioning the sequence of video images into a plurality of 3-dimensional blocks (300; 410; 460) of image data.

13. An encoding method according to claim 12, wherein the step of partitioning is performed in accordance with frames of the sequence of video images being either an I, P, or B-frame.

14. An encoding method according to any of claims 1 to 13, wherein the 3-dimensional block (300; 410; 460) of image data consists of an equal number of pixels in the horizontal (x), the vertical (y), and the temporal (t) direction.

15. A method for decoding an encoded sequence of video images, comprising the steps of:
decoding transform coefficients; and
inverse transforming the transform coefficients into a plurality of 2-dimensional blocks (420; 430; 470; 480) of image data by means of a 2-dimensional inverse transformation;
**characterized by**
deciding between either the horizontal-vertical (xy), horizontal-temporal (xt), and vertical-temporal (yt) domain; and
reconstructing a 3-dimensional block (300; 410; 460) of image data by stacking the plurality of 2-dimensional blocks (420; 430; 470; 480) of image data parallel to the decided domain, wherein the 3-dimensional block (300; 410; 460) consists of Nₓ pixels in a horizontal direction, N_{y} pixels in a vertical direction, and Nₜ pixels in a temporal direction corresponding to Nₜ consecutive video images, and wherein Nₓ, N_{y}, and Nₜ are positive integers larger than 1.

16. A decoding method according to claim 15, further comprising the step of decoding a domain identifier identifying either one of the horizontal-vertical (xy), horizontal-temporal (xt), and vertical-temporal (yt) domain; and wherein the step of deciding is performed in accordance with the decoded domain identifier.

17. A decoding method according to claims 15 or 16, further comprising the steps of
predicting the 3-dimensional block (300; 410; 460) of image data from previously decoded image data; and
adding a result of the step of predicting to the 3-dimensional block (300; 410; 460) of image data.

18. A decoding method according to claim 17, wherein the step of predicting is based on interpolation and/or extrapolation of previously decoded image data.

19. A decoding method according to claim 18, wherein the 3-dimensional block (300; 410; 460) of image data comprises I-frames only.

20. A decoding method according to claim 17, wherein the step of predicting is based on motion compensation.

21. A decoding method according to claim 20, wherein the 3-dimensional block (300; 410; 460) of image data comprises B-frames only.

22. A decoding method according to claim 20, wherein the 3-dimensional block (300; 410; 460) of image data comprises B and P-frames.

23. A decoding method according to any of claims 15 to 22, wherein the inverse orthogonal transformation is an inverse discrete cosine transformation.

24. A decoding method according to any of claims 15 to 23, wherein the 3-dimensional block (300; 410; 460) of image data consists of an equal number of transform coefficients in the horizontal (x), the vertical (y), and the temporal (t) direction.

25. An encoder for encoding a sequence of video images, comprising:
a transformation means for transforming a plurality of 2-dimensional blocks (420; 430; 470; 480) of image data into transform coefficients by means of a two-dimensional transformation; and
an encoding means for encoding the transform coefficients;
**characterized by**
a selecting means for selecting either one of the horizontal-vertical (xy), horizontal-temporal (xt), and vertical-temporal (yt) domain in a 3-dimensional block (300; 410; 460) of image data, the 3-dimensional block (300; 410; 460) consisting of Nₓ pixels in a horizontal direction, N_{y} pixels in a vertical direction, and Nₜ pixels in a temporal direction out of Nₜ consecutive video images, wherein Nₓ, N_{y}, and Nₜ are positive integers larger than 1; and
a dividing means for dividing the 3-dimensional block (300; 410; 460) in accordance with the selected domain into the plurality of 2-dimensional blocks (420; 430; 470; 480).

26. An encoder according to claim 25, wherein the encoding means is adapted for further encoding a domain identifier identifying the selected domain.

27. An encoder according to claim 25 or 26, wherein the selecting means is adapted for selecting the domain in accordance with an image content of the 3-dimensional block (300; 410; 460) of image data.

28. An encoder according to any of claims 25 to 27, further comprising a coding efficiency estimating means for estimating coding efficiencies achievable by selecting either one of the horizontal-vertical (xy), horizontal-temporal (xt), and vertical-temporal (yt) domain; and wherein the selecting means is selecting the domain in accordance with an output of the coding efficiency estimating means.

29. An encoder according to any of claims 25 to 28, further comprising:
a predicting means for predicting the 3-dimensional block (300; 410; 460) of image data from previously encoded image data; and
a subtracting means for subtracting an output of the predicting means from the 3-dimensional block (300; 410; 460) of image data to encode a prediction error signal.

30. An encoder according to claim 29, wherein the predicting means is adapted for predicting the 3-dimensional block (300; 410; 460) of image data based on interpolation and/or extrapolation of previously encoded image data.

31. An encoder according to claim 30, wherein the 3-dimensional block (300; 410; 460) of image data comprises I-frames only.

32. An encoder according to claim 29, wherein the predicting means is adapted for predicting the 3-dimensional block (300; 410; 460) of image data based on motion compensation.

33. An encoder according to claim 32, wherein the 3-dimensional block (300; 410; 460) of image data comprises B-frames only.

34. An encoder according to claim 32, wherein the 3-dimensional block (300; 410; 460) of image data comprises B and P-frames.

35. An encoder according to any of claims 25 to 34, wherein the two-dimensional transformation is a discrete cosine transformation.

36. An encoder according to any of claims 25 to 35, further comprising a partitioning means for partitioning the sequence of video images into a plurality of 3-dimensional blocks (300; 410; 460) of image data.

37. An encoder according to claim 36, wherein the partitioning means is adapted to partition the sequence of video images in accordance with frames of the sequence of video images being either an I, P, or B-frame.

38. An encoder according to any of claims 25 to 37, wherein the 3-dimensional block (300; 410; 460) of image data consists of an equal number of pixels in the horizontal (x), the vertical (y), and the temporal (t) direction.

39. A decoder for decoding an encoded sequence of video images, comprising:
a decoding means for decoding transform coefficients; and
an inverse transforming means for inverse transforming the transform coefficients into a plurality of 2-dimensional blocks (420; 430; 470; 480) of image data by means of a 2-dimensional inverse transformation;
**characterized by**
a deciding means for deciding between either the horizontal-vertical (xy), horizontal-temporal (xt), and vertical-temporal (yt) domain; and
a reconstructing means for reconstructing a 3-dimensional block (300; 410; 460) of image data by stacking the plurality of 2-dimensional blocks (420; 430; 470; 480) of image data parallel to the decided domain, wherein the 3-dimensional block (300; 410; 460) consists of **Nₓ** pixels in a horizontal direction, **N_{y}** pixels in a vertical direction, and **Nₜ** pixels in a temporal direction corresponding to **Nₜ** consecutive video images, and wherein **Nₓ, N_{y},** and **Nₜ** are positive integers larger than 1.

40. A decoder according to claim 39, wherein the decoding means is adapted for further decoding a domain identifier identifying either one of the horizontal-vertical (xy), horizontal-temporal (xt), and vertical-temporal (yt) domain; and wherein the deciding means is deciding in accordance with the decoded domain identifier.

41. A decoder according to claims 39 or 40, further comprising:
a predicting means for predicting the 3-dimensional block (300; 410; 460) of image data from previously decoded image data; and
an adding means for adding a result of the step of predicting to the 3-dimensional block (300; 410; 460) of image data.

42. A decoder according to claim 41, wherein the predicting means is predicting the 3-dimensional block (300; 410; 460) of image data based on interpolation and/or extrapolation of previously decoded image data.

43. A decoder according to claim 42, wherein the 3-dimensional block (300; 410; 460) of image data comprises I-frames only.

44. A decoder according to claim 41, wherein the predicting means is predicting the 3-dimensional block (300; 410; 460) of image data based on motion compensation.

45. A decoder according to claim 44, wherein the 3-dimensional block (300; 410; 460) of image data comprises B-frames only.

46. A decoder according to claim 44, wherein the 3-dimensional block (300; 410; 460) of image data comprises B and P-frames.

47. A decoder according to any of claims 39 to 46, wherein the inverse orthogonal transformation is an inverse discrete cosine transformation.

48. A decoder according to any of claims 39 to 47 wherein the 3-dimensional block (300; 410; 460) of image data consists of an equal number of transform coefficients in the horizontal (x), the vertical (y), and the temporal (t) direction.
